# EUROPEAN PATENT SPECIFICATION

(11) **EP 1 606 737 B1**
(45) Date of publication and mention of the grant of the patent: **10.09.2008**
(21) Application number: 04722889.5
(22) Date of filing: 24.03.2004
(51) Int. Cl.: G06F 17/30, H04Q 7/22

(54) **STORING AND RETRIEVING MULTIMEDIA DATA AND ASSOCIATED ANNOTATION DATA IN A MOBILE TELEPHONE SYSTEM**
SPEICHERUNG UND RÜCKGEWINNUNG VON MULTIMEDIA-DATEN UND ASSOZIIERTEN ANMERKUNGSDATEN IN EINEM MOBILEN TELEFONSYSTEM
STOCKAGE ET EXTRACTION DE DONNEES MULTIMEDIA ET DONNEES D'ANNOTATION ASSOCIEES DANS UN SYSTEME DE TELEPHONE MOBILE

(30) Priority: 24.03.2003 GB 0306727
(43) Date of publication of application: 21.12.2005
(73) Proprietor: CANON KABUSHIKI KAISHA, Ohta-ku, Tokyo (JP)
(72) Inventor: ATKINSON, Michael Richard, Berkshire RG42 1 YL (GB); JOST, Uwe Helmut, Surrey GU27 1JW (GB)
(74) Representative: TBK-Patent
(86) International application number: PCT/GB2004/001257
(87) International publication number: WO 2004/086254

(56) References cited:
- WO-A-02/28059
- WO-A-02/097672
- US-A1- 2002 065 074
- US-B1- 6 243 713

## Description

The present invention relates to a telephone system, to parts thereof and to methods of use thereof. The invention has particular although not exclusive relevance to the use of mobile telephones to store and retrieve images or other multimedia files on a remote server via the telephone network.

Some of the latest mobile telephones that are available include a camera for allowing the user to take pictures. An image management application (software programme) is usually provided with the mobile telephone to allow users to be able to view the images, add them to favourites, rename them, delete them, send them to other users who have mobile telephones capable of receiving images etc. However, in view of the limited memory and processing power in the mobile telephone, there is a limit to the number of photographs that can be stored and the functions that the user can perform.

WO 02/097672 discusses a system in which mobile phone users are able to upload data objects through a mobile phone network to a remote server for storage. Users of other mobile phones are then able to access the data objects stored at the remote server using their mobile phones.

WO 02/28059 discusses a system in which mobile phone users are able to access .remotely stored information using their mobile phones. In particular, WO 02/28059 discusses a dictionary service in which a mobile phone user is able to retrieve a remotely stored dictionary definition using their mobile phone.

US 6,243,713 discusses a system for retrieving stored multimedia documents in which when storing a multimedia document the different components of the multimedia document are analysed to generate multimedia indexing data. In response to a multimedia query, then multimedia query is compared witch the multimedia indexing data to identify multimedia documents for retrieval.

The present invention aims to provide an alternative mobile telephone system which allows users to store more photographs and to manage them with increased functionality and flexibility.

According to one aspect of the invention, there is provided a mobile telephone system as claimed in claim 1.

According to another aspect of the invention, there is provided a mobile telephone system as claimed in claim 6.

According to a further aspect of the invention, there is provided a mobile telephone system as claimed in claim 11.

According to another aspect of the invention, there is provided a mobile telephone system as claimed in claim 12.

A number of embodiments will now be described by way of example only with reference to the accompanying drawings in which:
Figure 1 is a schematic diagram illustrating the main components of a mobile telephone system embodying the present invention;
Figure 2 schematically illustrates the main components of a storage message generated by a mobile telephone forming part of the system shown in Figure 1;
Figure 3 schematically illustrates a word and phoneme lattice generated by a speech retrieval system shown in Figure 1;
Figure 4 schematically illustrates the main components of a query message generated by the mobile telephone shown in Figure 1;
Figure 5 is a block diagram illustrating the main components of the mobile telephone illustrated in Figure 1;
Figure 6a is a flow chart illustrating the operation of the mobile telephone shown in Figure 1 when running a storage and retrieval application;
Figure 6b is a flow chart illustrating the main processing steps performed by the mobile telephone in handling a storage request or a retrieval request;
Figure 7 is a block diagram illustrating the main components of a storage and retrieval system forming part of the mobile telephone system shown in Figure 1;
Figure 8 is a block diagram illustrating the main components of a speech retrieval system forming part of the mobile telephone system shown in Figure 1;
Figure 9 is a timing diagram illustrating the operation of the speech retrieval system shown in Figure 8 during a storage operation;
Figure 10 is a timing diagram illustrating the operation of the speech retrieval system shown in Figure 8 during a retrieval operation;
Figure 11 is a flow chart illustrating the operation of the speech retrieval system shown in Figure 8 when updating the annotations for a user;
Figure 12 is a block diagram illustrating an alternative arrangement of the speech retrieval system illustrated in Figure 1; and
Figure 13 illustrates an alternative arrangement of the storage and retrieval part of the system illustrated in Figure 1.

### OVERVIEW

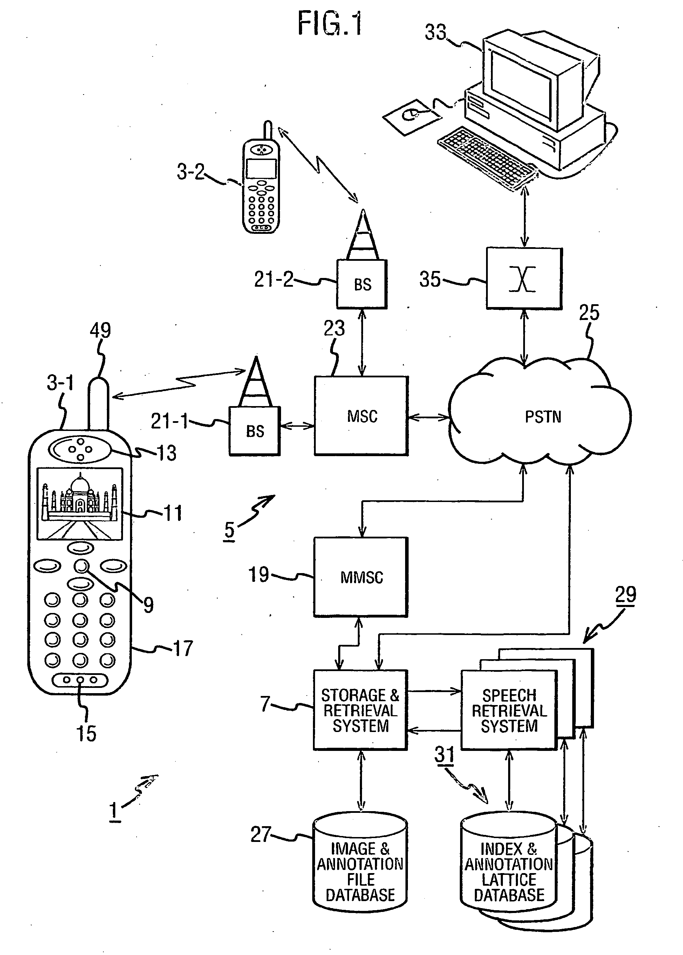

Figure 1 schematically illustrates a mobile telephone system 1 which allows users to take a picture using their mobile telephone 3-1, 3-2 and to transmit them together with a voice or text annotation over the telephone network 5 to a remote storage and retrieval system 7, where the picture and annotation are stored. The system 1 also allows users to input a query into their mobile telephone 3 which is then transmitted over the telephone network 5 to the remote storage and retrieval system 7 in order to retrieve a previously stored image.

### Storage Operation

When an image is to be stored, the picture itself may be captured by a camera 9 of the mobile telephone 3 or it may be received from a remote device such as the remote mobile telephone 3-2. As shown, the camera 9 is built in or integrated with the mobile telephone. However, as other possibilities, the camera may be detachably connectable to the mobile telephone or couplable to the mobile telephone via a remote communications link such as an Infra Red or wireless (for example BlueToothTM) connection. The picture to be sent is then displayed on the display 11 so that the user can confirm that it is the correct picture. In the example illustrated in Figure 1, the picture is an image of the Taj Mahal.

The mobile telephone 3-1, then prompts the user (either by way of an audible prompt through a loudspeaker 13 or via a visible prompt displayed on the display 11) to input an annotation for the image to be stored. As will be described later, the annotation is used to help retrieve the image after it has been stored. The user can input the annotation into the mobile telephone 3-1 either as a voice annotation via a microphone 15 or as a text annotation typed via the keypad 17. For example, for the image showm in Figure 1, the annotation may be the spoken phrase "picture of the Taj Mahal".

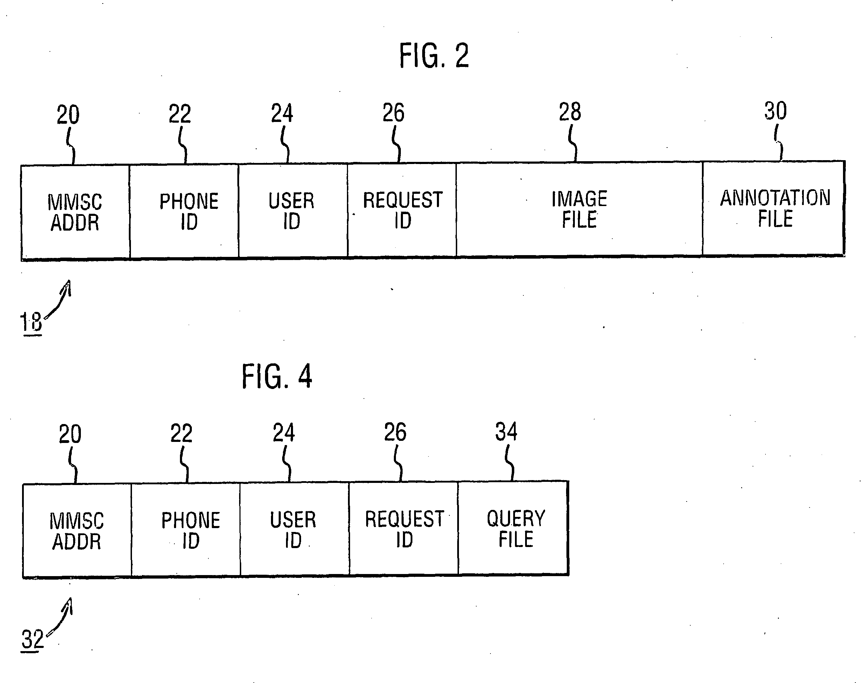

The mobile telephone 3-1 then creates an MMS (Multimedia Messaging Service) message with the picture file for the image to be stored together with either a text file or an audio file for the associated annotation. Figure 2 illustrates the main components of an MMS storage message 18 that is generated by the mobile telephone 3-1 in this embodiment. As shown, the MMS storage message 18 includes an MMSC address portion 20 which identifies the Internet protocol (IP) address for the multimedia messaging service centre (MMSC) 19 to which the storage messages is to be transmitted. As shown in Figure 2 the message 18 also includes a telephone ID 22 which identifies the make and model of the mobile telephone 3-1 that the user is using and a user ID 24 that identifies the current user of the mobile telephone 3-1. If there is only one user of the mobile telephone 3-1, then the user ID may simply be the telephone number of the mobile telephone 3-1. However, if more than one user uses the mobile telephone 3-1 then in addition to the mobile telephone number the user ID will also require an additional identifier for the current user. Various techniques can be used to identify the current user. For example, the mobile telephone 3-1 may prompt the user to input their user name and password. The MMS storage message 18 also includes a request ID 26 which identifies the request that is being made, which in this case is a storage request identifier. Finally, the MMS storage message 18 also includes the image file 28 for the picture to be stored together with the associated annotation file 30.

As illustrated in Figure 1, the MMS storage message 18 is transmitted by the mobile telephone 3-1 to the nearest base station 21-1 which then forwards the message 18 to a message switching centre (MSC) 23 of the mobile telephone network operator. The MSC 23 processes the received MMS message 18 to identify the address 20 of the intended recipient and then routes the message 18 to the MMSC 19 through the public switched telephone network (PSTN) 25. The MMSC 19 processes the received MMS message 18 to determine what the message 18 is for (from request ID 26) and hence what the MMSC 19 should do with the message 18. In this case, the request ID 26 identifies that the MMS message 18 is a request to store an image file and therefore, the MMSC 19 forwards the MMS message 18 to the storage and retrieval system 7.

The storage and retrieval system 7 then processes the received MMS message 18 to determine which user sent the message (from the user ID 24) and to extract the telephone ID 22, the image file 28 and the text or audio annotation file 30 from the message 18. The storage and retrieval system 7 then stores the image file 28 together with the associated annotation file 30 within an image and annotation file database 27 under a unique image ID. The storage and retrieval system 7 then passes the annotation file 30 together with the generated image ID, user ID 24 and telephone ID 22 to one of a number of replicated speech retrieval systems 29.

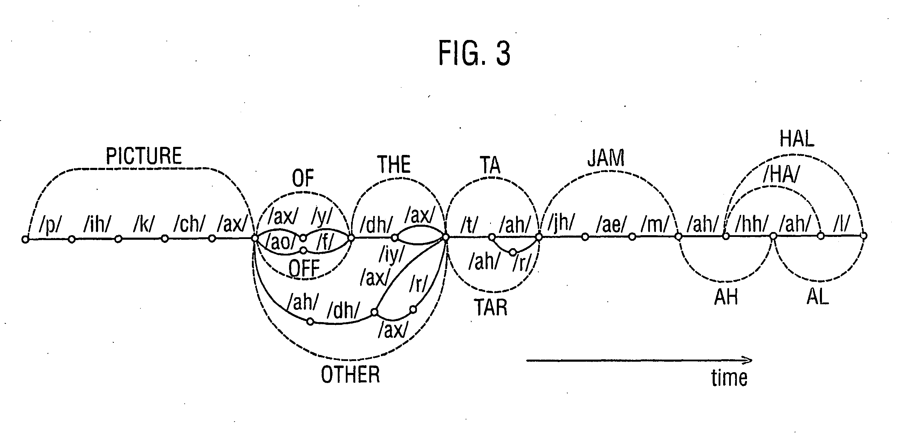

In this embodiment, the speech retrieval system 29 processes the annotation file either using an automatic speech recognition unit (not shown) if the annotation was a spoken annotation or using a text to phoneme converter if the annotation was typed, to generate a word and phoneme lattice conforming to the MPEG 7 spoken content lattice structure. Figure 3 illustrates the form of the word and phoneme lattice annotation data generated for the spoken annotation 'picture of the Taj Mahal'. As shown, the word and phoneme lattice is an acyclic directed graph with a single entry point and a single exit point. It represents different parses of the user's spoken input. As shown, the phoneme lattice identifies a number of different phoneme strings which correspond to the spoken annotation. Figure 3 also shows that the automatic speech recognition unit includes any words that are recognised within the spoken annotation. For the example shown in Figure 3, the speech recognition unit identifies the words 'picture', 'of' , 'off', 'the', 'other', 'ta', 'tar', 'jam', . 'ah', 'hal', 'ha', and 'al'. The reader is referred to Chapter 18 of the book "Introduction to MPEG-7 Multimedia Content Description Interface", for more details of these word and phoneme MPEG7 compliant lattices. The speech retrieval system 29 then processes the word and phoneme lattice to identify what three phoneme sequences (triphones) exist within the lattice for use in a triphone index.

The speech retrieval system 29 then stores the word and phoneme annotation lattice together with the triphone index entries in an index and annotation lattice database 31 together with the associated image ID generated by the storage and retrieval system 7.

### Retrieval Operation

In a retrieval operation, the user initiates a retrieval request on the mobile telephone 3-1. In response, the mobile telephone 3-1 prompts the user to input a query to be used to find the desired image from the storage and retrieval system 7. The user can input the query either as a spoken query via the microphone 15 or as a text query via the keypad 17. For example, if the user wishes to retrieve the picture of the Taj Mahal previously stored, then the input query may be a spoken utterance or a typed input of the words 'Taj Mahal'. After the user has input the query, the mobile telephone 3-1 generates an appropriate MMS query message. Figure 4 schematically illustrates the main contents of an MMS query message 32. As with the storage message 18, the query message 32 includes the MMSC address 20, the telephone ID 22, the user ID 24, and a request ID 26. In this case, the request ID 26 will identify that it is a query message. As shown in Figure 4, the query message 32 also includes a query file 34 which will either be a text file or an audio file depending on if the user's query was typed or spoken. The mobile telephone 3-1 then transmits the generated MMS query message 32 to the remote storage and retrieval system 7 via the MMSC 19 as before.

The storage and retrieval system 7 then processes the MMS query message 32 to determine the user who sent the message (from the user ID 24) and to extract the telephone ID 22 and the query file 34. The storage and retrieval system 7 then retrieves all the image IDs for the images that are available to the user making the request. These will include all the images that the user has previously stored himself as well as other images that are available from other users (such as from friends and family) .

The image IDs retrieved from the database 27 by the storage and retrieval system 7 are then passed, together with the query file 34, to the speech retrieval system 29. The speech retrieval system 29 then converts the query file into a query word and phoneme lattice in the same way that the annotation word and phoneme lattice was generated. The speech retrieval system 29 then identifies the triphones within the query and phoneme lattice which it then compares with the entries in the triphone index corresponding to the image IDs identified by the storage and retrieval system 7, in order to identify a sub-set of the image ID's which may correspond to the query. The speech retrieval system 29 then compares the query word and phoneme lattice with the annotation word and phoneme lattices for the subset of the image ID's identified from the triphone comparison, in order to identify the N best matches of the user's query with the annotations in the database 31. The speech retrieval system 29 then returns the image IDs for the N best matches to the storage and retrieval system 7, which then retrieves the N best images from the image database 27 and generates a thumbnail image for each. In generating the thumbnail image, the storage and retrieval system 7 will use the telephone ID 22 to identify the size and resolution of the display and the types of images that it can display. The storage and retrieval system 7 then scales the retrieved images, converts their format (if necessary), compresses them and enhances the thumbnails so that they will display optimally for the user's mobile telephone 3. The storage and retrieval system 7 then transmits these thumbnail images back to the user's mobile telephone 3-1 via the MMSC 19 and the telephone network 5.

The user can then browse through the thumbnail images on their mobile telephone 3-1 to find and select the image that they wanted to retrieve. If the desired image is not amongst the thumbnail images, then the user can transmit, via their mobile telephone 3-1, another request to the storage and retrieval system 7 informing it that the search was not successful and requesting more search results to be returned. Once the thumbnail image for the desired image has been received, the user can select it to cause the mobile telephone 3-1 to generate a further MMS message identifying the selected image which it transmits back to the storage and retrieval system 7 via the telephone network 5 and the MMSC 19. The storage and retrieval system 7 then retrieves the selected image from the image database 27 and processes it by scaling, format conversion, compression and enhancement so that the retrieved image will display optimally on the user's mobile telephone 3-1. The storage and retrieval system 7 then transmits the processed image back to the user's mobile telephone 3-1 via the MMSC 19 and the telephone network 5 for display to the user.

### User Management

In this embodiment the storage and retrieval system 7 includes an HTML based web interface (not shown) to allow users to have direct access to their images stored in the image database 27 from a personal computer 33 which can connect to the web interface via, for example, the PSTN 25 and the local exchange 35. In this embodiment, the users can access the storage and retrieval web interface via their PC 33 to:
i) create and delete albums of images (such as a Christmas 2002 album and a Spring 2003 vacation album etc);
ii) browse photographs based on the date that they were taken, when they were stored and/or last accessed, the album in which the photograph belongs etc;
iii) add and delete photographs, including bulk load and delete functions;
iv) move photographs between albums;
v) set up family and friends groups for the purpose of sharing photographs;
vi) mark photographs and albums as shareable either individually or collectively by user group or by individual users;
vii) mark photographs with priority and other information;
viii) add additional annotations (text or speech);
ix) remove annotation files;
x) make annotations private so that they cannot be retrieved;
xi) make annotations excluded from retrieval searches;
xii) make a sequence of photographs into a slide show with commentary;
xiii) set parameters for the speech retrieval system (such as the number of documents (N) to be retrieved, a score cut-off etc).

In this embodiment, the ability of the users to use a separate personal computer 33 to manage their photographs in the database 27 is preferred because of the limited functionality and communication bandwidth available on most existing mobile telephones 3. However, with advances in mobile telephone technology, more of these management functions will be able to be performed by the user via their mobile telephone 3.

An overview has been given above of the way in which users can take photographs using their mobile telephone 3 and then transmit them over the telephone network 5 for storage in a database 27 of a storage and retrieval system 7. A more detailed description will now be given of the components of the system described above and their operation.

### Mobile Telephone

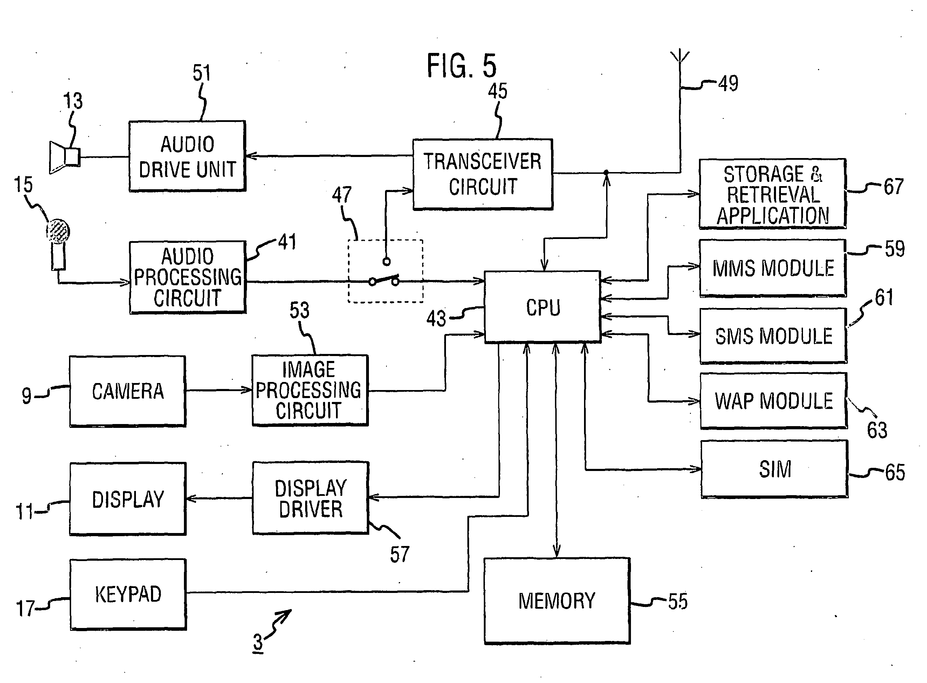

Figure 5 is a block diagram illustrating the main components of the mobile telephone 3-1 used in this embodiment. As shown, the mobile telephone 3-1 includes a microphone 15 for receiving speech signals from the user and for converting them into corresponding electrical signals. The electrical speech signals are then processed by an audio processing circuit 41 in order to filter out noise and amplify the speech signals. The processed speech signals are then either passed to a central processing unit (CPU) 43 or to a transceiver circuit 45 via a CPU controlled switch 47. In this embodiment, the switch 47 usually connects the output of the audio processing circuit 41 to the transceiver circuit 45 except when the user is inputting a spoken annotation or a spoken query during which the output from the audio processing circuit 41 is input into the CPU 43.

The transceiver circuit 45 operates in the usual way by encoding the audio for transmission to the nearest base station 21 via the mobile telephone aerial 49. Similarly, the transceiver circuit 45 receives encoded speech from the other party to the call which it decodes and outputs to an audio drive circuit 51 which amplifies the signal and outputs it to the loudspeaker 13 for audible playout to the user. The transceiver circuit 45 also receives messages from the CFU 43 for transmission to the telephone network 5 and messages from the telephone network 5 which it passes to the CPU 43.

The mobile telephone 3-1 also includes an image processing circuit 53 which processes the images taken by the camera 9 and converts them into an appropriate image format such as a JPEG image file. The image file is then passed from the image processing circuit 53 to the CPU 43 which stores the image in memory 55. The mobile telephone 3 also includes a display driver 57 which is controlled by the CPU 43 and which controls the information that is displayed on the display 11. The mobile telephone 3 also includes: an MMS module 59 which generates MMS messages and which extracts files from received MMS messages; an SMS module 61 which generates SMS text messages from text typed in by the user via the keypad 17 and which retrieves text from received SMS messages for display to the user on the display 11; a WAP module 63 which allows users to retrieve and interact with web pages from remote web servers via the telephone network 5; a SIM card 65 which stores various user data and user profiles used by the mobile telephone 3-1 and the telephone network 5; and a storage and retrieval application 67 which controls the storage and retrieval of photographs in the remote storage and retrieval system 7 and which provides a user interface for the user to control the browsing and selection of retrieved photographs.

In this embodiment, the operation of the mobile telephone 3-1 is conventional except for the storage and retrieval application 67. Consequently, the following description of the operation of the mobile telephone 3-1 is restricted to the operation of the main components of the storage and retrieval application 67 and its interaction with the other components of the mobile telephone 3-1.

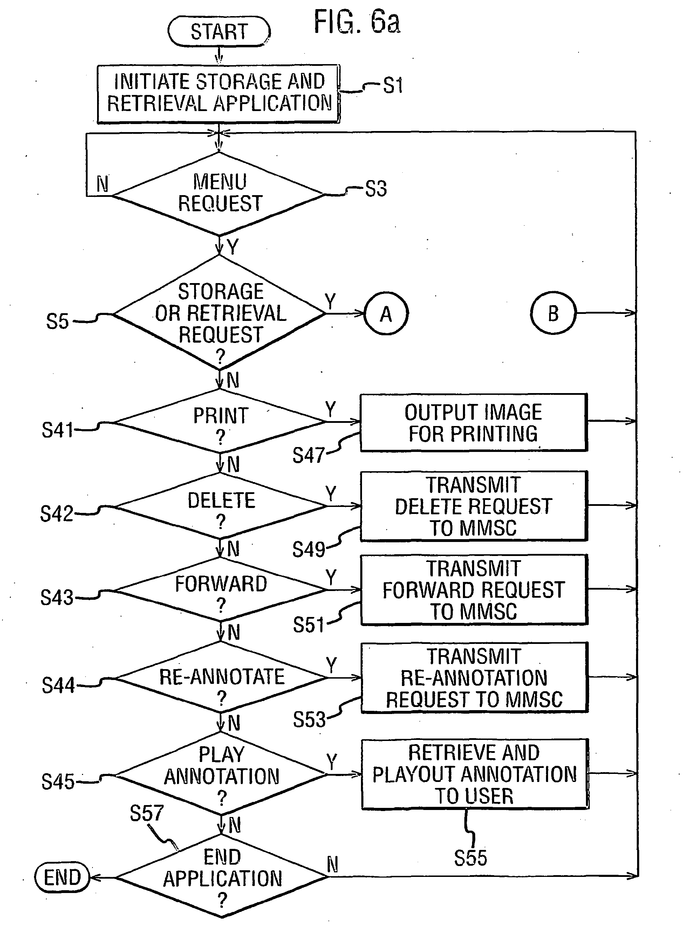

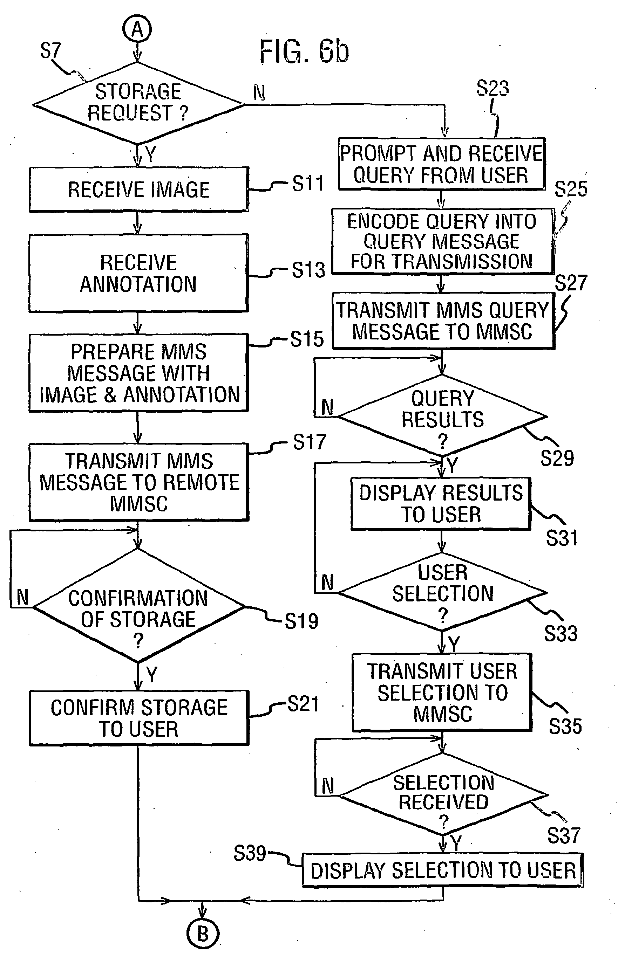

Figure 6a is a flow chart illustrating the main menu options available when the user initiates, in step S1 the storage and retrieval application 67. Once initiated, the mobile telephone 3-1 waits, in step S3, for the user to select one of the menu options displayed on the display 11, using the keypad 17. Once a menu option has been selected, the processing proceeds to step S5 where the storage and retrieval application 67 checks to see if the selected menu request is a storage or a retrieval request. If it is then the processing proceeds to `A' which is shown at the top of Figure 6b.

As shown in Figure 6b the processing proceeds to step S7 where the storage and retrieval application 67 determines if the selected menu option corresponds to a storage request. If it did, then the processing proceeds to step S11 where the mobile telephone 3-1 receives the image to be stored. This image may be received from the memory 55 or it may be captured directly by the camera 9 or it may be an image that is received from a remote user device such as another mobile telephone. Once the image to be stored has been received, the processing proceeds to step S13 where the storage and retrieval application 67 prompts for and awaits to receive an appropriate text or spoken annotation for the image to be stored. If the user inputs a spoken annotation, then the mobile telephone 3-1 can detect the end of the annotation either by detecting a button press made by the user or by detecting silence at the end of the spoken annotation. Once, the storage and retrieval application 67 has received the image to be stored together with the appropriate annotation, it sends these files to the MMS module 59 for creating an appropriate MMS storage message in step S15. The MMS module 59 addresses the message to the remote MMSC 19 using the IP address for the MMSC 19 which, in this embodiment, is stored in the SIM card 65. The MMS module 59 also includes the telephone ID 22 (which is stored in the memory 55) and the user ID 24 (which is stored in the SIM card 65). The generated MMS message 18 is then passed to the CPU 43 which transmits the MMS storage message 18 in step S17 to the remote MMSC 19 via the aerial 49.

Once the message has been transmitted, the storage and retrieval application 67 waits, in step S19, for a message transmitted back from the storage and retrieval system 7 confirming that the image has been stored. This confirmation message may also be received as an MMS message by the MMS module 59 or as a text message via the SMS module 61. The processing then proceeds to step S21 where the storage and retrieval application 67 outputs confirmation to the user that the image has been stored in the remote storage and retrieval system 7. In this embodiment, this confirmation is output to the user as a visible confirmation on the display 11 although in an alternative embodiment it may be output as an audible confirmation via the loudspeaker 13. The processing then returns to 'B' shown in Figure 6a, and then to step S3 where the storage and retrieval application 67 awaits the next menu selection.

If at step S7, the storage and retrieval application 67 determines that the user's request is not a request to store an image then the storage and retrieval application 67 assumes that the request is to retrieve an image. Therefore the processing proceeds to step S23 where the storage and retrieval application 67 prompts the user for and waits to receive an input query. As discussed above, this input query may be a text query input via the keypad 17 or a spoken query input via the microphone 15. As an example, if the user wishes to retrieve the picture of the Taj Mahal that was previously stored, the query might be a spoken input of the words 'Taj Mahal'. The text or audio input by the user is then passed to the MMS module 59 where it is encoded in step S25 into an appropriate query MMS message 32 for transmission. Like the MMS storage message 18, the MMS query message 32 will include the IP address for the remote MMSC 19, and the telephone ID 22 and user ID 24. The MMS query message 32 is then transmitted in step S27 by the CPU 43 via the aerial 49. The storage and retrieval application 67 then waits in step S29, to receive query results sent back from the remote retrieval system 7.

When the results are received, the storage and retrieval application 67 displays the results to the user in step S31. As discussed above the results that are received in this embodiment are in the form of thumbnail images which the storage and retrieval application 67 displays to the user in an appropriate graphical user interface on the display 11. The processing then proceeds to step S33 where the storage and retrieval application 67 waits to receive a selection of one of the images by the user. The image ID for the selected image is then passed to the MMS module 59 which creates an appropriate MMS message which is transmitted, in step S35, to the remote storage and retrieval system 7 via the MMSC 19. The storage and retrieval application 67 then waits, in step S37 to receive the selected image back from the remote storage and retrieval system 7. When the retrieved image is received, the storage and retrieval application 67 displays the retrieved image to the user on the display 11 in step S39. The processing then returns to step S3 as before.

Once the user has retrieved an image, the storage and retrieval application 67 offers a number of functions that the user can do with the retrieved image. The options available are illustrated in Figure 6a at steps S41 to S45. As shown, in step S41 it is possible for the user to request to print out the retrieved image. In this case, processing passes to step S47 where the image is output for printing purpose. This may be achieved, for example, by outputting the image data via an infra-red port (not shown) of the mobile telephone 3-1 for reception by the infra-red port of a nearby printer.

As illustrated by step S42, the user can also request to delete the retrieved image. In this case, processing proceeds to step S49 where an appropriate delete request is transmitted to the remote storage and retrieval system 7 .which deletes the image and annotation from the databases 27 and 31. This message may be transmitted either as an MMS message by the MMS module 59 or as a text message by the SMS module 61.

As illustrated in step S43, the user also has the option to forward the retrieved message, either to, for example, another mobile telephone 3 or to someone's email address. If the user selects to forward the retrieved image then the processing proceeds to step S51 where a new MMS message having the retrieved image and the recipient's address is generated and transmitted to the appropriate recipient via the remote MMSC 19.

As illustrated by step S44, the user also has the option to re-annotate the retrieved image. This may be chosen if the user has found it difficult to retrieve the image using the existing annotation. If the user does select to re-annotate the image, then the processing proceeds to step S53 where an appropriate new annotation is generated (in the manner described above) and an appropriate re-annotation MMS message is transmitted to the remote storage and retrieval system 7 via the MMSC 19.

As illustrated by step S45, the user can also request to play the annotation associated with the retrieved image. If the user selects to play the annotation for the selected image, then processing proceeds to step S55 where an appropriate MMS message is transmitted to the remote storage and retrieval system requesting the annotation file for the selected image that is stored in the image and annotation file database 27. Once this annotation file has been returned, the storage and retrieval application 67 outputs the annotation to the user. If the annotation file is a text file then it is output as text displayed on the display 11 whereas, if it is an audio file, then it is output via the loudspeaker 13.

Finally, the user can, in step S57, select to end the storage and retrieval application 67 running in the mobile telephone 3-1.

### Stowage And Retrieival System

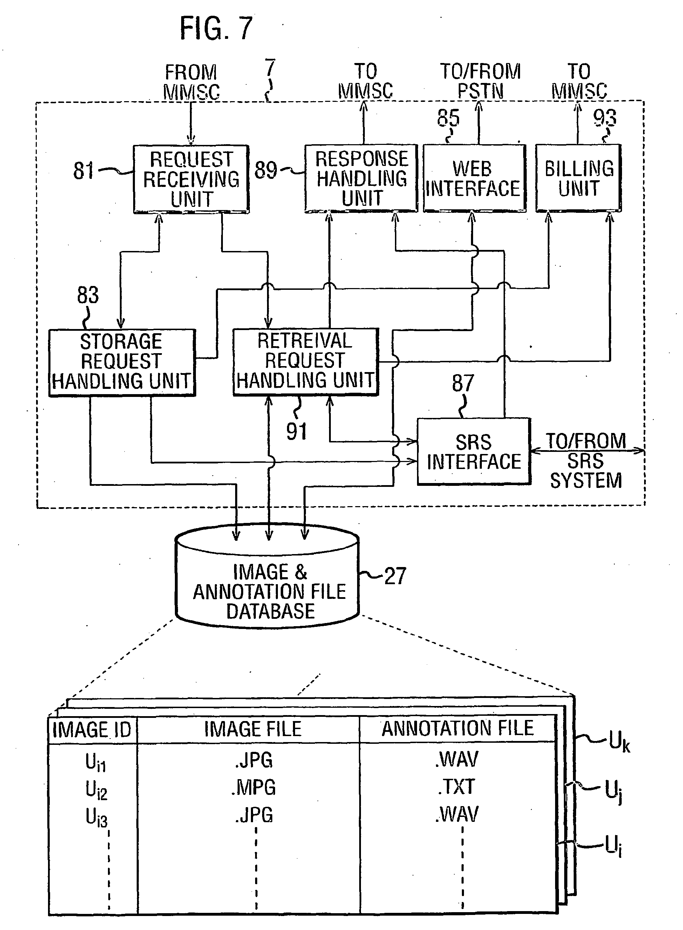

Figure 7 is a block diagram illustrating in more detail the main components of the storage and retrieval system 7 shown in Figure 1. As shown, it includes a request receiving unit 81 which operates to receive the MMS requests forwarded by the MMSC 19. The request receiving unit 81 processes the received MMS request to extract the request ID `6 to determine if it is a storage request or a retrieval request. If it is a storage request then the MMS message 18 is forwarded to a storage request handling unit 83 which extracts the image file and the annotation file from the MMS storage message 18, creates a new image ID and stores the two files in the image and annotation file database 27 under the new image ID. In this embodiment, the storage request handling unit 83 stores the image files and the corresponding annotation files for each user in a separate folder. The different user files stored within the database 27 are illustrated in Figure 7 as the tables Ui, Uj, Uk for users I, J and K etc. As shown, the folder for each user includes all the image files for the user, together with the corresponding annotation file and the corresponding image ID. Further, as described above, each user can define sub folders (or albums) within their folder (Ui), via a web interface 85. Although not shown, each image will also include access rights defining the users who can have access to the image. These access rights can be defined either via the web interface 85 or by including the access rights with the MMS storage request transmitted from the user's mobile telephone 3-1.

After storing the image file and the annotation file, the storage request handling unit 83 passes the annotation file together with the telephone ID 22 and the user ID 24 from the MMS message 18 to the speech retrieval system 29 via a speech retrieval system (SRS) interface 87. The SRS interface 87 then waits to receive acknowledgement that the annotation file has been processed to generate the appropriate annotation lattice from the speech retrieval system 29. When it receives this acknowledgement the SRS interface 87 forwards the acknowledgement to a response handling unit 89 which generates an appropriate SMS or MMS message confirming that the image file has been successfully stored which it transmits back to the user's mobile telephone 3-1.

If the request receiving unit 81 determines from the request ID 26 that the received MMS message is a retrieval request, then it passes the received MMS message 32 to a retrieval request handling unit 91. The retrieval request handling unit 91 then extracts the user ID 24, telephone ID 22 and query file from the received MMS message 32 and uses the user ID 24 to identify the image IDs for all of the images that can be accessed by the user identified by the user ID 24. As discussed above, these will include:
i) the image IDs for all of the images stored in the user's file (Ui) in the database 27;
ii) the image IDs for images in other user's friends and family groups to which the user making the request belongs; and
iii) the image IDs for any images which have been marked as being accessible to all users.

The retrieval request handling unit 91 then passes the retrieved image IDs together with the query file 34, user ID 24 and telephone ID 22 from the received MMS message 32 to the speech retrieval system 29 via the SRS interface 87. The SRS interface 87 then waits to receive the list of N best image IDs corresponding to the user's query from the speech retrieval system 29. When this N best list is received, the SRS interface 87 returns the list to the retrieval request handling unit 91 which then uses the image IDs in the N best list to retrieve the images from the database 27 and to generate corresponding thumbnail images for them. The request handling unit 91 then passes the thumbnail images to the response handling unit 89 which generates an appropriate MMS message, including the thumbnail images for the N best images together with the corresponding image IDs, which it transmits back to the mobile telephone 3-1 of the user who made the query (determined from the telephone number in the user ID 24).

As discussed above, after the user has seen the N best images, the user may transmit a request for a selected one of the images. In this case, the request receiving unit 81 will receive either an MMS message or an SMS message identifying the image ID for the image to be retrieved. In this case, the- request receiving unit 81 passes the user ID 24 and the image ID to the retrieval request handling unit 91 which then retrieves the image corresponding to the image ID, which it then forwards to the response handling unit 89. As before, the response handling unit 89 then generates an appropriate MMS message with the requested image file which it transmits back to the user's mobile telephone 3-1.

As shown in Figure 7, the storage and retrieval system 7 also includes a billing unit 93 which controls the billing of the services provided by the storage and retrieval system 7. In particular, in this embodiment, each time a user requests an image to be stored in the database 27, the storage request handling unit 83 passes details of the user who made the request and the number of images that have been stored within the database 27. The billing unit 93 then calculates an appropriate charge for this service and then transmits a billing message to an appropriate billing agent (such as the mobile telephone operator or the service provider) who can charge the user in the usual way. Additionally, in this embodiment, the user is also billed each time they retrieve an image from the database 27. However, they are not billed for retrieving and browsing through the thumbnail images since this may not identify the image that they are looking for. Therefore, it is only after the user sends a request for a specific image file that the retrieval request handling unit 91 informs the billing unit 93 of the user who is retrieving the image so that the billing unit 93 can calculate and generate an appropriate billing message for sending to the billing agent. In this embodiment, in order to encourage users to share access to their photographs with other user's, the billing unit 93 provides a rebate (a royalty) to each user when one of their images is retrieved by another user.

### Speech Retrieval System

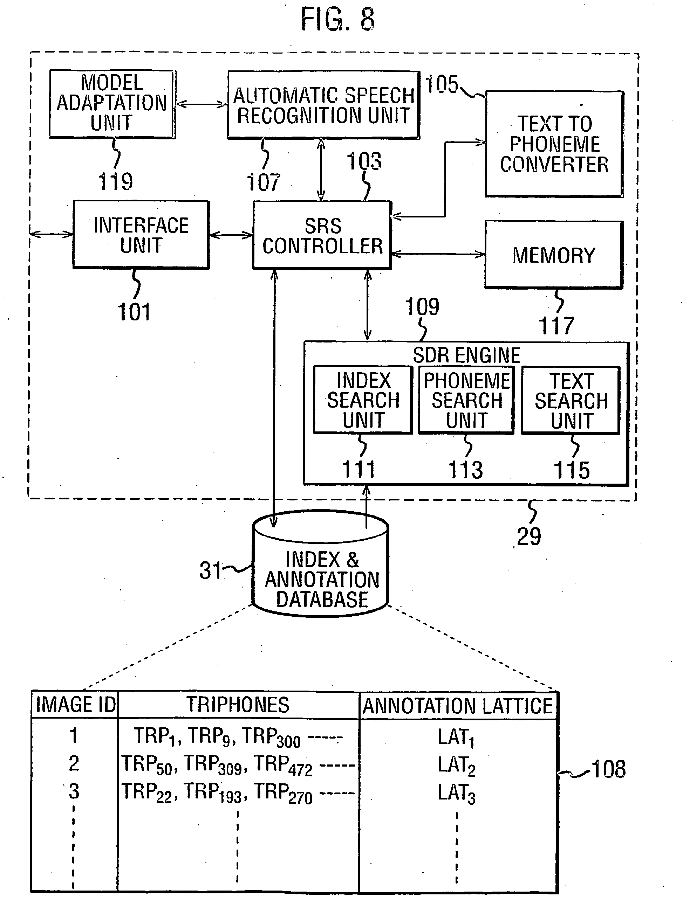

Figure 8 is a block diagram illustrating the main components of the speech retrieval system 29 used in this embodiment. As shown, the speech retrieval system 29 includes an interface unit 101 for providing an interface with the storage and retrieval system 7. As shown, data received from the storage and retrieval system 7 by the interface unit 101 is forwarded to a speech retrieval system (SRS) controller 103 which controls the operation of the speech retrieval system 29. The SRS controller 103 also includes a management interface (not shown) for management and control (such as starting, stopping, memory usage, performance monitoring etc).

When the SRS controller 103 receives an annotation file or a query file, it checks to see if it is a text or an audio file. If the annotation file or query file is a text file then it passes the file to a text-to-phoneme converter 105 which converts the text in the file into a sequence or lattice of phonemes corresponding to the text. The text-to-phoneme converter 105 then returns a combined word and phoneme lattice using the original text and the determined phonemes, to the SRS controller 103.

If the SRS controller 103 determines that the annotation or query file is an audio file then it passes the file to an automatic speech recognition unit 107. In this embodiments, speech recognition models adapted for the different mobile telephones (to account for different audio paths) and for the different users are also stored in the index and annotation database 31. Therefore, when the SRS controller 103 receives an annotation file or a query file that is to be recognised by the automatic speech recognition unit 107, the SRS controller 103 uses the user ID 24 and the telephone ID 22 received from the storage and retrieval systems 7 to retrieve the appropriate speech recognition models from the database 31 which it also passes to the ASR unit 107. The ASR unit 107 then performs an automatic speech recognition operation on the audio query or annotation file using the speech recognition models to generate words and phonemes corresponding to the spoken annotation or query. These words and phonemes are then combined into the above-described word and phoneme lattice which is then returned to the SRS controller 103.

After the SRS controller 103 receives the generated word and phoneme lattice, it passes it to a spoken document retrieval engine 109 which processes the lattice to identify all the different triphones within the lattice. The SDR engine 109 then returns the identified triphones to the SRS controller 103. If the lattice is an annotation lattice then the SRS controller 103 stores the annotation lattice together with the identified triphones and the image ID in the index and annotation lattice database 31. The form of the index and annotation data stored in the database 31 is illustrated in Figure 8 by the table 108 underneath the database 31. As shown, the left-hand column of the table identifies the image ID, the right-hand column is the annotation lattice for the image associated with the image ID and the middle column identifies the triphones appearing in the corresponding annotation lattice.

If the word and phoneme lattice is a query lattice, then the SRS controller 103 retrieves the triphone entries for the received image ID's from the database 31 and then passes the query lattice, the query triphones and the retrieved annotation triphones to the spoken document retrieval (SDR) engine 109. The SDR engine 109 then uses an index search unit 111 to compare the query triphones with the annotation triphones, in order to identify the annotations that are most similar to the user's query. In this way, the index search unit 111 acts as a pre-filter to filter out images that are unlikely to correspond to the user's query. The image ID's that are not filtered out by the index search unit 111 are then passed to the phoneme search unit 113 which compares the phonemes in the query lattice with the phonemes in the annotation lattices for each of the remaining image ID's and returns a score representing their similarity to the SRS controller 103. The SRS controller 103 then ranks the image ID's in accordance and the scores returned from the phoneme search unit 113. The SRS controller 103 then returns the N best image ID's to the storage and retrieval system 7 via the interface unit 101.

As shown in Figure 8, the SDR engine 109 also includes a text search unit 115 which can be used in addition to or instead of the phoneme search unit 113 to compare the words in the query lattice with the words in the annotation lattices. The results of the text search can then either be combined with the results of the phoneme search or can be used on their own to identify the N best matches.

As shown in Figure 8, the speech retrieval system 29 also includes a memory. 117 in which the various user queries and annotations are buffered until they are ready to be processed by the SRS controller 103. In this embodiment, the user queries are buffered separately from the annotations and the queries are given higher priority since a user is waiting for the results.

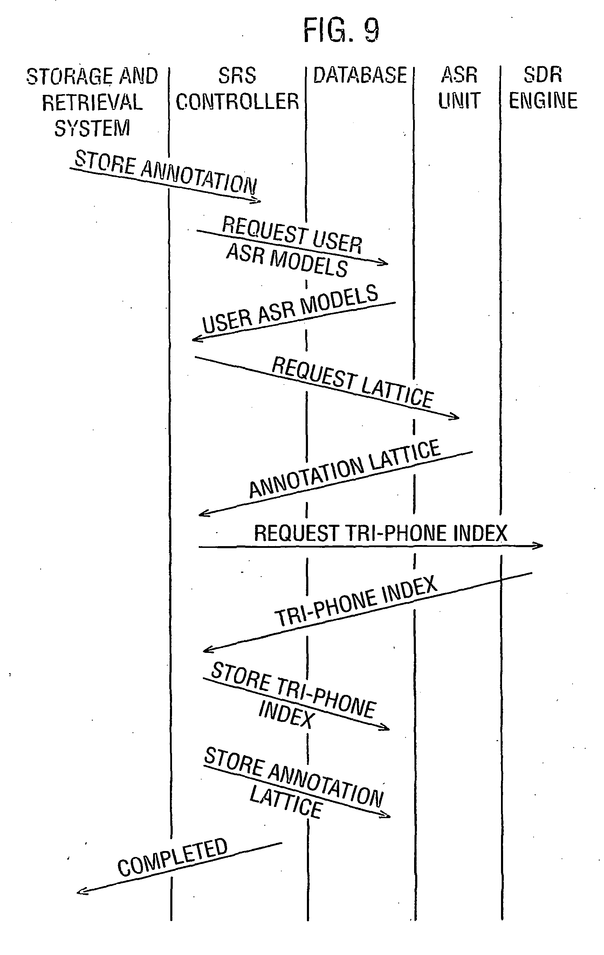

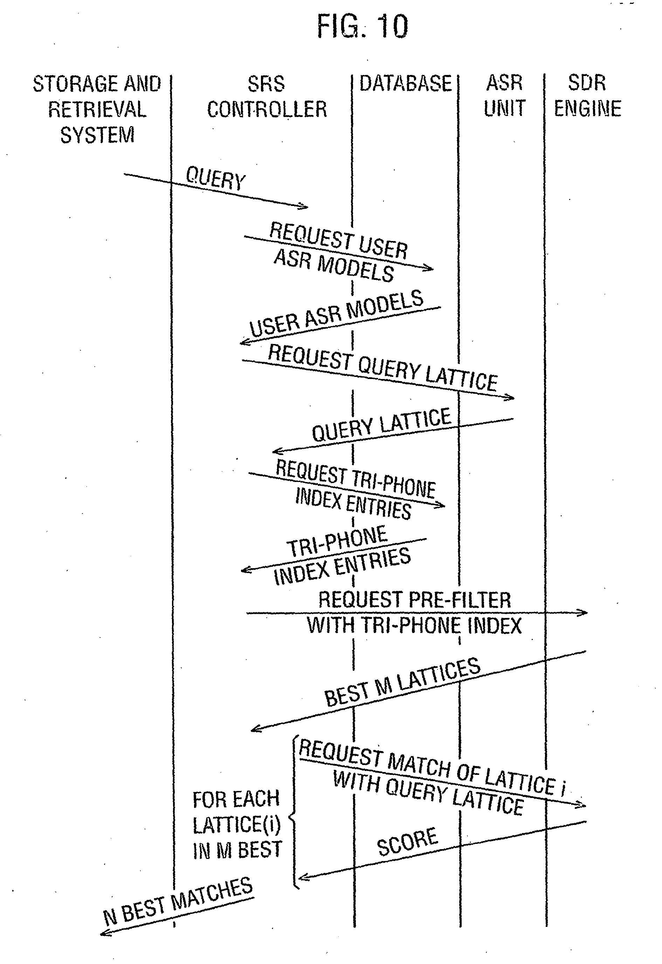

Figures 9 and 10 illustrate timing diagrams for the operation of the speech retrieval system 29 shown in Figure 8 during a storage operation and a retrieval operation when the annotation and query are generated from speech. Referring to Figure 9, initially, the SRS controller 103 receives a request to store the annotation from the storage and retrieval system 7. The SRS controller 103 then requests and receives the automatic speech recognition models for the user who made the annotation from the database 31. The automatic speech recognition models, together with the annotation file, are then passed to the automatic speech recognition unit 107 in order to generate the above described word and phoneme lattice. Once generated, the lattice is returned to the SRS controller 103 which then passes the lattice to the SDR engine 109 requesting it to generate the triphone index for the annotation. The triphone index is then passed back to the SRS controller 103 which stores the index in the database 31 together with the annotation lattice under the corresponding image ID. The SRS controller 103 then acknowledges to the storage and retrieval system that the annotation lattice has been completed and stored.

Referring to Figure 10, initially the SRS controller 103 receives the query from the storage and retrieval system 7. The SRS controller 103 then requests and receives the automatic speech recognition models for the user who made the query from the database 31. These models, together with the query, are then passed to the automatic speech recognition unit 107 which generates and returns the query word and phoneme lattice to the SRS controller 103. The SRS controller 103 then requests and receives the triphone index entries stored in the database 31 for all of the image IDs identified by the storage and retrieval system 7. The SRS controller 103 then passes the query word and phoneme lattice, together with the retrieved triphone index entries, to the SDR engine 109 where the index search unit 111 compares the query triphones with the annotation triphones to identify the M best annotation lattices which it returns to the SRS controller 103. The SRS controller 103 then requests the phoneme search unit 113 within the SDR engine 109 to match each of the M best annotation lattices with the query lattice and to return a score representing the similarity between the two. The SRS controller 103 then ranks the results to identify the N (where N is less than M) best matches. The SRS controller 103 then returns the image IDs for the N best matches to the storage and retrieval system 7.

### ASR Model Adaption

In this embodiment, the automatic speech recognition unit 107 is designed to work with a number of different types of automatic speech recognition models. Initially, a set of speaker independent models will be used which can work with any speaker or any telephone (although the system will need to know the speaker's language in order to select the correct language phoneme models to use). However, a model adaptation unit 119 is provided in this embodiment, in order to adapt the speech recognition models for both the telephone (in order to take into account the different audio paths that will be experienced by users using different mobile telephones) and for the different speakers.

Adaptation for the different mobile telephones 3 can be achieved off-line by individually testing each of the different mobile telephone types and generating a set of automatic speech recognition models for each one. It is also possible to use the annotations spoken by many users with a particular mobile telephone type to generate the telephone model, although this will require large amounts of data.

With regard to adapting the speech models for each of the different users, various techniques can be used. For example:
i) the user may be prompted to speak a number of phonetically rich sentences which may be done during a registration process for accessing the services provided by the storage and retrieval system 7;
ii) the performance of the unadapted ASR models may be monitored (by seeing which of the thumbnail photographs are retrieved as full images) and if the retrieval performance is low, initiating a training sequence with the user;
iii) initially using unadapted ASR models and then providing the facility to allow the user to request a training session at any time;
iv) initially using unadapted ASR models and then after a certain amount of usage, prompting the user if they want to perform a training session;
v) by performing an unsupervised training using the speech within the user's annotations and queries;
vi) by monitoring which of the retrieved photographs are the desired ones and by using the queries and the annotations corresponding to the retrieved photographs for unsupervised learning.

As those skilled in the art will appreciate, the model adaptation unit 119 can perform any one or more of the above techniques to train the ASR models for each of the different users. It may also be possible to classify the speakers into broad types (based on sex, accent etc.) and have general ASR models for each type.

In this embodiment, the automatic speech recognition unit 107 may be updated as future developments and improvements are made to speech recognition technology. When this happens, the phonemes and words output by the new automatic speech recognition unit 107 may differ from those output by the old automatic speech recognition unit 107 for the same audio input. Therefore, in this embodiment, when the automatic speech recognition unit 107 is updated, the annotation files for all of the images stored in the database 27 are reprocessed by the speech retrieval system 29 to regenerate the annotation lattices and the triphone indexes in the database 31. In this way, the annotation lattices and the triphone indexes are more likely to correspond to a new query lattice generated by the new automatic speech recognition unit 107. In this embodiment, the ASR models for each speaker are also updated before the annotation files for the users are updated, thereby ensuring optimal recognition accuracy of the ASR unit 107.

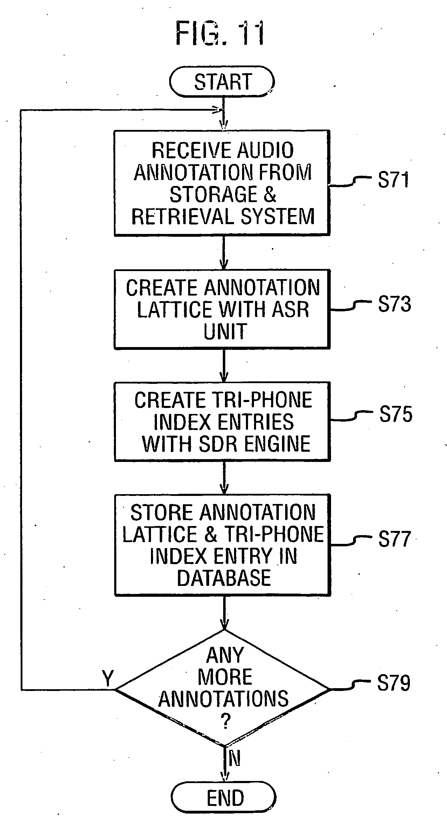

The way in which the updating of the annotations is achieved in this embodiment is illustrated in the flowchart shown in Figure 11. As shown, initially at step S71, the speech retrieval system 29 receives an audio annotation from the storage and retrieval system 7. It then passes this annotation together with the user ID and telephone ID to the automatic speech recognition unit 107 which then creates, in step S73, the annotation lattice for the current audio annotation. The generated annotation lattice is then passed to the SDR engine 109 which creates the triphone index entries for that annotation lattice in step S75. The annotation lattice and the triphone index entries are then stored, in step S77, within the index and annotation lattice database 31. The processing then passes to step S79 where the speech retrieval system 29 determines if there are any more audio annotation files to be re-annotated. If there are, then the processing returns to step S71 for the next annotation file. If there are not, then the processing ends. The speech retrieval system 29 then stores the word and phoneme annotation lattice together with the corresponding triphone index in the index and annotation lattice database 31 under the associated image ID generated by the storage and retrieval system 7.

### MODIFICATIONS AND ALTERNATIVE EMBODIMENTS

A mobile telephone system has been described above in which users can take pictures with their mobile telephone and store them in a central database via the mobile telephone network. The photographs are stored together with annotations which are used to facilitate the subsequent retrieval of the stored photographs.

The annotations may be typed or spoken and the user can retrieve stored photographs using text or speech queries which are compared with the stored annotations. As those skilled in the art will appreciate, various modifications can be made to the system described above. Some of these modifications will now be described.

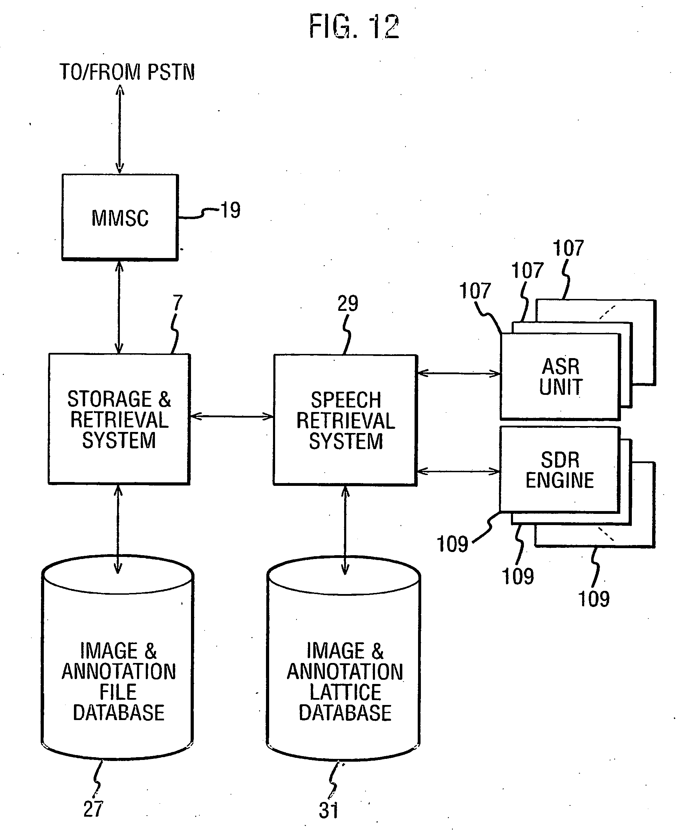

In the first embodiment described above, several instances of the speech retrieval system 29 and several instances of the index and annotation lattice database 31 were provided to handle the requests from the different users of the system. As those skilled in the art will appreciate, there are various ways of arranging the speech retrieval system 29. For example, Figure 12 illustrates an embodiment where a single speech retrieval system 29 is provided which shares the tasks with a plurality of automatic speech recognition units 107 and a plurality of spoken document retrieval engines 109. In this case, a single index and annotation lattice database 31 would be provided.

In the above embodiment, all of the annotation lattices and triphone indexes were stored in a single database 31 (although several replicas of the database 31 were used). This system architecture may have problems when operating with a large number of users, each having a large number of annotations. For example, each time a user stores a new image in the storage and retrieval system, the annotation file must be copied to all of the annotation databases 31. This will represent a significant overhead for a large scale deployment. Instead of having a single database, a segmented database architecture may be used in which a plurality of speech retrieval systems 29 are provided each having access to only a portion of the entire database of indexes and annotation lattices. In such an embodiment, the storage and retrieval system would have to decide on which of the speech retrieval systems 29 to pass a user's annotation or a user's query. The storage and retrieval system 7 would also have to intelligently assign users to a speech retrieval system 29 so that users within the same groups (such as friends and family) are serviced by the same speech retrieval system 29. For those (hopefully rare) occasions where the annotation lattices for a search are on more than one speech retrieval system database 31, the storage and retrieval system will have to retrieve the extra annotation lattices and pass them together with the request to the speech retrieval system 29 that will perform the search. As those skilled in the art will appreciate, such an architecture simplifies the deployment of the system as the expense of a more complex storage and retrieval system 7.

An alternative architecture, would be to use a distributed database system in which a plurality of speech retrieval systems 29 are provided each having its own index and annotation lattice database 31. In such a distributed database system, some of the annotation lattices will be stored on each of the speech retrieval system databases 31 and a key for those that are not stored will be provided so that if the speech retrieval system 29 requests an annotation lattice that is not stored on the database 31, the database server can use the key to retrieve the annotation lattice from the appropriate database.

In the above embodiment, the storage and retrieval system 7 was arranged to call upon the services of the speech retrieval system 29 when required. As those skilled in the art will appreciate, the present invention can be used in a system that already has a storage and retrieval system 7 which operates on an image database upon request. In such an embodiment, a central controller could be used which receives the user request and then calls upon the services of the storage retrieval system 7 and the speech retrieval system 29 as required.

In the above embodiment, the user was able to carry out a number of functions after retrieving an image from the remote storage and retrieval system. As those skilled in the art will appreciate, the functions described above are given by way of example only and other functions (such as user programmed functions) may be performed. For example, instead of printing the retrieved image to a printer near the user's mobile telephone, a user programmed function may be defined so that a request is transmitted back to the storage and retrieval system requesting it to print the image on high quality photograph paper and to send it to the user by post.

In the above embodiment, the storage and retrieval system transmitted a plurality of thumbnail images in response to a user's query. Preferably, the user's mobile telephone is arranged to display the thumbnail for the best match image as soon as it is received without waiting to receive the remaining thumbnails.

In the above embodiment, the user's mobile telephone included a storage and retrieval application which controlled the capturing of the image, the annotation of the image, the transmission of the appropriate message to the remote storage and retrieval system and the subsequent playout of the results from the remote storage retrieval system in response to a user query. As those skilled in the art will appreciate, it is not essential to have such a dedicated program on the user's mobile telephone. The system may operate using, for example, the WAP module instead. In this case, the images would be downloaded to the user's mobile telephone as a web page together with appropriate Javascript instructions to allow the user to select images from the results.

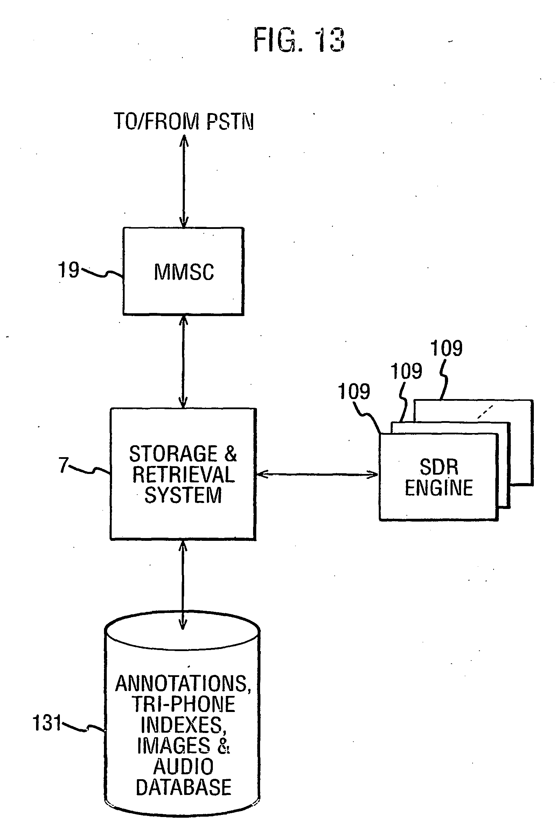

In the above embodiment, the speech recognition was performed within the speech retrieval system. In an alternative embodiment, the speech recognition may be performed within the user's mobile telephone. Whilst this will simplify the operation of the speech retrieval system 29, it is also likely to decrease the retrieval efficiency because it is likely that the automatic speech recognition unit within the mobile telephone will have to be less accurate in view of the limited processing power and memory available within the mobile telephone. However, having the automatic speech recognition on the mobile telephone will enable other features such as voice commands on the telephone and will reduce the round trip delay associated with transmitting the audio for recognition over the mobile telephone network. Providing the ASR unit within the user's mobile telephone also increases the complexity in updating the annotations stored in the remote storage and retrieval system if the ASR unit is updated. Figure 13 schematically illustrates the form of a remote storage and retrieval system that may be used in an embodiment where the speech recognition is performed on the user's mobile telephone. As shown, in this example, the images, annotation files, annotation lattices and triphone indexes are all stored in a common database 131. The storage and retrieval system 7 then controls the storage and retrieval of this data from the database 131 using, where necessary, the SDR engine 109.

Alternatively still, the speech storage system (including the annotations etc) may also be stored in the mobile telephone. In this case, when storing an image file or the like, the user's mobile telephone would create the annotation and store it locally within the telephone together with an image ID. The mobile telephone would then transmit the image file together with the image ,ID to the remote storage system. When the user subsequently tries to retrieve the image, the mobile telephone would recognise the user's input query and compare it with the locally stored annotations to identify the image (or images) to be retrieved from the remote storage system. The mobile telephone would then transmit the image ID for the or each image to be retrieved to the remote storage system, which would then transmit the necessary images or thumbnails, as appropriate, back to the mobile telephone. However, any index and the annotations on the mobile telephone would have to be kept up to date as family and friends add photographs that are available to the user.

Instead of providing a full automatic speech recognition unit in the user's mobile telephone, the front end preprocessing usually carried out in an automatic speech recognition unit may be performed on the user's mobile telephone. In this case, for example, feature vectors (such as cepstral feature vectors) may be transmitted to the remote storage and retrieval system instead of an audio file. Such an embodiment has the advantage that it will reduce the amount of data that has to be transmitted by the mobile telephone to the remote storage and retrieval system.

In the above embodiment, the user was able to store photographs taken by the mobile telephone in the remote storage and retrieval system. As those skilled in the art will appreciate, instead of just photographs, the user can transmit videos (with soundtrack) or audio (music or speech) or text files for storage in the remote storage and retrieval system. The user can also use the mobile telephone to create presentations which can also then be stored in the remote storage and retrieval system. Where the user has retrieved a video or a presentation, the system preferably operates so that the user can enter another spoken request to jump to a desired place within the video or presentation.

In the above embodiment, it was mentioned that several users may use the same mobile telephone. This is important in situations where, for example, the main user of the telephone is not the owner of the telephone or the person who pays the bill. In this case, when billing, the billing agent should identify the user of the telephone who used the storage and retrieval system so that the owner can verify and control its use.

In the above embodiments, a word and phoneme lattice and a triphone index were generated for both the annotation and the subsequent query. The triphone index entries were used to perform a fast initial search to reduce the number of annotation lattices against which a full lattice match is to be performed. As those skilled in the art will appreciate, it is not essential to use such triphones in order to perform this fast initial search. The speech retrieval system may perform a full lattice match of the query lattice with all of the annotation lattices identified by the storage and retrieval system.

In the above embodiment, the speech retrieval system generated a combined word and phoneme lattice for both the annotation and the query. As those skilled in the art will appreciate, it is not essential to generate a word and phoneme lattice. For example, the speech retrieval system may use the automatic speech recognition system to generate the most likely sequence of words corresponding to the annotation or query. In this case, a Boolean text comparison can be performed between the query and the annotations. However, the use of phonemes increases the efficiency of the speech retrieval system since the use of phonemes can overcome the problems associated with out of vocabulary words of the automatic speech recognition system. Further, it is not essential for the automatic speech recognition unit to generate words for the query and annotation. Instead, the automatic speech recognition unit might only generate a sequence of phonemes (with or without phoneme alternatives) corresponding to the user's query or annotation. Further, instead of generating phonemes, any sub-word units may be used such as phones, syllables etc.

In the above embodiment, a phoneme and word lattice complying with the MPEG 7 standard was generated for user queries and annotations. As those skilled in the art will appreciate, it is not essential to employ a lattice conforming to the MPEG 7 standard. Any phoneme and word lattice may be used. Additionally, if both phonemes and words are used in the annotation or the query, then it is not essential to use a combined lattice. However, the use of a combined lattice is preferred as this reduces the required storage space and the amount of searching that has to be performed in the retrieval operation.

In the above embodiment, the user can speak a query or an annotation into their mobile telephone which is then transmitted to the remote storage and retrieval system for processing as described above. In a preferred embodiment, the user is also able to append a speech command with the annotation in order to, for example, restrict the number of image IDs to be searched. For example, the user may input the query "find my photograph of the Taj Mahal". Provided the automatic speech recognition unit can identify the command "my" within the query, then the storage and retrieval system can limit the image IDs that are passed over to the speech retrieval system to include only those image IDs from the user who made the query and not those from other users. The number of commands that the automatic speech recognition unit would be able to detect would have to be fairly limited, so that it would be able to recognise them as commands and not part of the query. The commands may, for example, limit the photographs to be searched to those of a particular group or individual or to photographs taken over a predetermined time period. If the photographs are to be searched on the time that they were taken or the time that they were stored, then this timing information will also have to be stored either in the image database or the annotation lattice database. The timing information may be generated by the storage and retrieval system or may form part of the image and annotation files transmitted from the mobile telephone to the storage and retrieval system.

Where voice commands are appended to the query, the speech retrieval system would process the query and if it does not detect a command or if the command is not recognised then it would use the whole query to search the user's annotations. Where the speech retrieval system recognises the command but there is uncertainty as to exactly which of the commands is requested, then the speech retrieval system will remove the command from the query and use the rest of the query to search the user's annotations. However, when the command is recognised, the speech retrieval system performs the search using the criteria contained in the command to limit the search of the user's annotations. Additionally, where spoken commands are included within the user's query and when they are recognised by the speech retrieval system, they can be used for unsupervised training to adapt the user's ASR models.

In the above embodiments, the user controlled the operation of the storage and retrieval application on the mobile telephone using menu options and key presses. As those skilled in the art will appreciate, other user interfaces may be provided to allow the user to control the mobile telephone. For example, icons may be displayed on the user telephone which can then be selected by the user or, if an automatic speech recognition unit is provided in the users mobile telephone, then speech recognition commands may be used to control the operation of the mobile telephone.

In the above embodiments, after the user transmitted a retrieval request, the user's mobile telephone waited to receive the search results. In embodiments where this retrieval operation may take several seconds, the storage and retrieval system preferably returns status messages back to the user's mobile telephone for display to the user confirming that the retrieval operation is in progress.

In the above embodiments, the storage and retrieval system generated a set of thumbnail images as the search results of a user query. As those skilled in the art will appreciate, the results may be presented to the user in other ways. For example, the storage and retrieval system 7 may retrieve the best match only and display it to the user. If it is not the desired photograph, then the user can press a button or speak an appropriate command requesting the next best match, etc. However, such an embodiments is not preferred since the delay between pressing the button and seeing the next match may be several seconds which would make the user interface difficult to use. Further, it is only possible to see one match at a time so there is no way to see if there are no good matches. This type of interface is desirable if there is usually only one desired match and it is almost always found as the best match by the speech retrieval system.

In the above embodiments, the user was billed each time they stored an image or retrieved an image from the storage and retrieval system. Instead of billing on a per use basis, the system may be arranged to bill on a subscription basis or on a bandwidth (number of bits sent) basis. In practice, a number of different billing systems may be used.

In the above embodiments, when multiple users shared the same mobile telephone, the mobile telephone transmitted a user ID identifying the current user on the mobile telephone. As those skilled in the art will appreciate this is not essential. The automatic speech recognition system forming part of the speech retrieval system may use characteristics of the user's speech to distinguish between the different users of the mobile telephone.

As described above, the mobile telephone is used both for storage and retrieval of data. As another possibility or additionally, a user may add data to a database by downloading the data from a computer, for example the user's desktop computer, laptop computer or personal digital assistant. Thus, as an example, music data files may be stored in MP3 format at the computer and then added to a database so that the user may retrieve their own music data files and listen to them using their mobile telephone or load music data files from a separate provider's music database. This would enable use of the system by people who have a mobile telephone without a camera but who have access to a digital camera, allowing images or other data files to be viewed, edited and sent from their database.

In the above embodiment, the mobile telephone is used to access multimedia files in a remote storage system. As those skilled in the art will appreciate, the remote storage system may be formed as a stand alone device such as a computer server, printer, photocopier or the like. Alternatively, the remote storage and retrieval system may be run on a computer device which is connected to a conventional network such as a LAN or WAN.

In the above embodiments, the user typed or spoke an annotation for each file to be stored in the remote storage and retrieval system. Alternatively, the camera and/or the remote storage and retrieval system may automatically.generate an annotation for each data file to be stored. For example, the mobile telephone can generate an automatic annotation based on the time or date that the image is captured. Further, in modern mobile telephony systems, it is possible to identify the current location of the user's mobile telephone. The mobile telephone or the remote storage and retrieval system may use this location information to annotate the data file being received. Alternatively still, if the user's mobile telephone includes a scheduler application, the storage and retrieval application which is run on the mobile telephone may access the schedule information using the time and date that the data file was generated to determine an appropriate annotation. For example, if a user is on vacation in Paris in February 2003 and this information is stored within the scheduler of the mobile telephone, then if the user captures an image the storage and retrieval information run on the mobile telephone can retrieve the scheduler information and generate an appropriate annotation such as "picture 1 Paris February 2003". This automatically generated annotation can then be passed to the remote storage and retrieval system for use in subsequent retrieval operations.

It will, of course, be appreciated that mobile telephones are in some countries referred to as "cellphones".

## Claims

1. A mobile telephone (3) system comprising a mobile telephone network (21,23), a mobile telephone (3) coupled to the network and a storage and retrieval system (7) coupled to the network, wherein the mobile telephone (3) includes:
a first receiver (9;15) for receiving multimedia user data;
a second receiver (15;17) for receiving annotation data associated with the multimedia user data;
a transmitter (45;49) for transmitting the multimedia user data and the associated annotation data to the telephone network (21,23);
wherein the telephone network (21,23) is operable to receive the multimedia user data and the associated annotation data transmitted from the mobile telephone (3) and to forward the multimedia user data and associated annotation data to said storage and retrieval system (7) together with a user ID identifying a user of the mobile telephone (3); and
wherein said storage and retrieval system (7) is operable to:
receive the multimedia user data, the associated annotation data and the user ID;
process received annotation data to generate word and phoneme lattice data representative of said received annotation data;
process said generated word and phoneme lattice data to generate triphone index data indicative of the sequences of three phonemes present in said generated word and phoneme lattice data representative of said received annotation data; and
store the multimedia user data in a store associated with the user identified by the user ID, said generated word and phoneme lattice data and said triphone index data for subsequent retrieval using said associated word and phoneme lattice data and said triphone index data.

2. A system according to claim 1, wherein said multimedia user data comprises one or more of an image, a video sequence, audio and a multimedia presentation.

3. A system according to claim 1 or 2, wherein said annotation data comprises text input by the user via a keypad (17) of the mobile telephone (3).

4. A system according to claim 1 or 2 wherein said annotation data comprises a spoken annotation input to the mobile telephone (3) via a microphone (15) of the mobile telephone (3).

5. A system according to claim 1 or 2, wherein said annotation data comprises a unique identifier for the multimedia user data.

6. A mobile telephone (3) system comprising a mobile telephone network (21,23), a mobile telephone (3) coupled to the network and a storage and retrieval system (7) coupled to the network and storing a plurality of multimedia user files and associated word and phoneme lattice data and triphone index data for a plurality of different users of the mobile telephone network (21,23): wherein the mobile telephone (3) includes:
means (67) for generating a multimedia file retrieval request comprising a user input query;
means (45,49) for transmitting the retrieval request to the telephone network (21,23);
wherein the telephone network (21,23) is operable to receive the multimedia file retrieval request transmitted from the mobile telephone (3) and to forward the retrieval request to said storage and retrieval system (7) together with a user ID identifying the user of the mobile telephone (3) making the request ; and
wherein the storage and retrieval system (7) is operable:
i) to receive the retrieval request and the user ID;
ii) to process the received retrieval request to generate word and phoneme lattice data representative of said received retrieval request;
iii) process said generated word and phoneme lattice data to generate triphone index data indicative of the sequences of three phonemes present in said generated word and phoneme lattice data representative of said received annotation data;
iv) to select word and phoneme lattice data annotations to compare with the word and phoneme lattice data generated for said user input query in dependence upon the received user ID and the similarity between the triphone index data associated with said word and phoneme lattice data and the triphone index data generated for said user input query;
v) to compare the word and phoneme lattice data generated for the user input query with the selected word and phoneme lattice data to identify a multimedia user file to be retrieved; and
vi) to transmit the identified multimedia user file to the user.

7. A system according to claim 6, wherein said multimedia user file comprises at least one of an image, a video file, an audio file and a multimedia presentation.

8. A system according to claim 6 or 7, wherein said user input query comprises text input by the user via a keypad of the mobile telephone (3).

9. A system according to claim 6 or 7, wherein said user input query comprises a spoken query input to the mobile telephone (3) via a microphone of the mobile telephone (3).

10. A system according to claim 6 or 7, wherein said storage and retrieval system (7) is operable to identify a plurality of possible multimedia files to be retrieved and is operable to transmit data identifying the plurality of identified multimedia files to the user for the user to select a multimedia file to retrieve.

11. A mobile telephone (3) system comprising a mobile telephone network (21,23), a mobile telephone (3) coupled to the network and a storage and retrieval system (7) coupled to the network, wherein the mobile telephone (3) includes:
a first receiver (9; 15) operable to receive user data;
a second receiver (15;17) operable to receive an annotation associated with the user data;
a processor operable to process received annotation data to generate word and phoneme lattice data representative of said received annotation data and process the generated word and phoneme lattice data to generate triphone index data indicative of the sequences of three phonemes present in said generated word and phoneme lattice data representative of said received annotation data;
means for generating identification data associating generated word and phoneme lattice data and triphone index data with the associated user data;
a transmitter (45;49) for transmitting the user data and the generated word and phoneme lattice data and triphone index data and associated identification data to the telephone network (21,23);
wherein the telephone network (21,23) is operable to receive the user data and generated word and phoneme lattice data and triphone index data and associated identification data transmitted from the mobile telephone (3) and to forward the user data and generated word and phoneme lattice data and triphone index data and associated identification data to said storage and retrieval system (7);
wherein said storage and retrieval system (7) is operable to receive and to store the user data and the generated word and phoneme lattice data and triphone index data and the associated identification data for subsequent retrieval.

12. A mobile telephone (3) system comprising a mobile telephone network (21,23), a mobile telephone (3) coupled to the network and a storage and retrieval system (7) coupled to the network;
wherein the mobile telephone (3) includes:
means for generating a user data file retrieval request comprising a user input query;
means for storing a plurality of annotations each associated with a respective user data file via respective identification data, wherein each of said annotations comprises a word and phoneme lattice and associated triphone index data representative of three phone sequences present in the word and phoneme lattice;
means for generating a word and phoneme lattice representative of a user input query and associated triphone index data representative of three phone sequences present in the generated word and phoneme lattice;
means for comparing the triphone index data generated for a user input query to select a number of stored word and phoneme lattices for comparison with the word and phoneme lattice generated for a user input query;
means comparing the word and phoneme lattice generated for user input query with the selected stored word and phoneme lattices to identify the user data file to be retrieved from said storage and retrieval system (7); and
means for transmitting the identification data associated with the user data file to be retrieved to the telephone network (21,23);
wherein the telephone network (21,23) is operable to receive the transmitted identification data and is operable to forward identification data to said storage and retrieval system (7); and
wherein the storage and retrieval system (7) is operable to receive the transmitted identification data and to output the user data file corresponding to the received identification data.

13. A system according to claim 12, wherein said storage and retrieval system (7) is operable to output the user data file to the user via the mobile telephone network (21,23) and the user's mobile telephone (3).

## Patentansprüche

1. Mobiles Telefon- (3) -system mit einem Mobiltelefonnetzwerk (21, 23), einem mit dem Netzwerk gekoppelten Mobiltelefon (3) und einem mit dem Netzwerk gekoppelten Speicher- und Rückgewinnungssystem (7), wobei das Mobiltelefon (3) aufweist:
einen ersten Empfänger (9; 15) zum Empfangen von Multimedia-Nutzerdaten;
einen zweiten Empfänger (15; 17) zum Empfangen von Anmerkungsdaten, die den Multimedia-Nutzerdaten zugeordnet sind;
eine Übertragungseinrichtung (45; 49) zum Übertragen der Multimedia-Nutzerdaten und der zugeordneten Anmerkungsdaten an das Telefonnetzwerk (21, 23);
wobei das Telefonnetzwerk (21, 23) betreibbar ist zum Empfangen der von dem Mobiltelefon (3) übertragenen Multimedia-Nutzerdaten und der zugeordneten Anmerkungsdaten und zum Weiterleiten der Multimedia-Nutzerdaten und der zugeordneten Anmerkungsdaten an das Speicher- und Rückgewinnungssystem (7) zusammen mit einer Nutzer-ID, die einen Nutzer des Mobiltelefons (3) identifiziert; und
wobei das Speicher- und Rückgewinnungssystem (7) betreibbar ist zum:
Empfangen der Multimedia-Nutzerdaten, der zugeordneten Anmerkungsdaten und der Nutzer-ID;
Verarbeiten von empfangenen Anmerkungsdaten, um Wort- und Phonem-Gitterdaten, die die empfangenen Anmerkungsdaten darstellen, zu erzeugen;
Verarbeiten der erzeugten Wort- und Phonem-Gitterdaten, um Triphon-Indexdaten, die die Sequenzen von drei in den erzeugten Wort- und Phonem-Gitterdaten vorhandenen Phonemen bezeichnen, die die empfangenen Anmerkungsdaten darstellen, zu erzeugen; und
Speichern der Multimedia-Nutzerdaten, der erzeugten Wort- und Phonem-Gitterdaten und der Triphon-Indexdaten für ein anschließendes Rückgewinnen unter Verwendung der zugeordneten Wort- und Phonem-Gitterdaten und der Triphon-Indexdaten in einen Speicher, der dem durch die Nutzer-ID identifizierten Nutzer zugeordnet ist.

2. System gemäß Anspruch 1, wobei die Multimedia-Nutzerdaten eines oder mehrere von einem Bild, einer Videosequenz, Audio, und einer Multimediapräsentation umfassen.

3. System gemäß Anspruch 1 oder 2, wobei die Anmerkungsdaten durch den Nutzer über ein Tastenfeld (17) des Mobiltelefons (3) eingegebenen Text umfassen.

4. System gemäß Anspruch 1 oder 2, wobei die Anmerkungsdaten eine in das Mobiltelefon (3) über ein Mikrofon (15) des Mobiltelefons (3) eingegebene gesprochene Anmerkung umfassen.

5. System gemäß Anspruch 1 oder 2, wobei die Anmerkungsdaten einen eindeutigen Identifizierer für die Multimedia-Nutzerdaten umfassen.

6. Mobiles Telefon- (3) -system mit einem Mobiltelefonnetzwerk (21, 23), einem mit dem Netzwerk gekoppelten Mobiltelefon (3) und einem mit dem Netzwerk gekoppelten Speicher- und Rückgewinnungssystem (7) und einem Speichern einer Vielzahl von Multimedia-Nutzerdateien und zugeordneten Wort- und Phonem-Gitterdaten und Triphon-Indexdaten für eine Vielzahl von verschiedenen Nutzern des Mobiltelefonnetzwerks (21, 23), wobei das Mobiltelefon (3) aufweist:
eine Einrichtung (67) zum Erzeugen einer Multimediadatei-Rückgewinnungsanforderung mit einer Nutzer-Eingabeanfrage;
eine Einrichtung (45, 49) zum Übertragen der Rückgewinnungsanforderung an das Telefonnetzwerk (21, 23);
wobei das Telefonnetzwerk (21, 23) betreibbar ist zum Empfangen der von dem Mobiltelefon (3) übertragenen Multimediadatei-Rückgewinnungsanforderung und zum Weiterleiten der Rückgewinnungsanforderung zusammen mit einer Nutzer-ID, die den Nutzer des Mobiltelefons (3), der die Anforderung macht, identifiziert, an das Speicher- und Rückgewinnungssystem (7); und
wobei das Speicher- und Rückgewinnungssystem (7) betreibbar ist zum:
i. Empfangen der Rückgewinnungsanforderung und der Nutzer-ID;
ii. Verarbeiten der empfangenen Rückgewinnungsanforderung, um Wort- und Phonem-Gitterdaten, die die empfangene Rückgewinnungsanforderung darstellen, zu erzeugen;
iii. Verarbeiten der erzeugten Wort- und Phonem-Gitterdaten, um Triphon-Indexdaten zu erzeugen, die die Sequenzen von drei in den erzeugten Wort- und Phonem-Gitterdaten vorhandenen Phonemen, die die empfangenen Anmerkungsdaten darstellen, bezeichnen;
iv. Auswählen von Wort- und Phonem-Gitterdatenanmerkungen, um sie mit den Wort-und Phonem-Gitterdaten, die für die Nutzereingabe-Anfrage in Abhängigkeit von der empfangenen Nutzer-ID und der Ähnlichkeit zwischen den Triphon-Indexdaten, die den Wort-und Phonemgitterdaten und den für die Nutzereingabe-Anfrage erzeugten Triphon-Indexdaten zugeordnet sind, zu vergleichen.
v. Vergleichen der für die Nutzereingabe-Anfrage erzeugten Wort- und Phonem-Gitterdaten mit den ausgewählten Wort- und Phonem-Gitterdaten, um eine rückzugewinnende Multimedia-Nutzerdatei zu identifizieren; und
vi. Übertragen der identifizierten Multimedia-Nutzerdatei an den Nutzer.

7. System gemäß Anspruch 6, wobei die Multimedia-Nutzerdatei zumindest eines von einem Bild, einer Videodatei, einer Audiodatei und einer Multimediapräsentation umfasst.

8. System gemäß Anspruch 6 oder 7, wobei die Nutzereingabe-Anfrage durch den Nutzer über ein Tastenfeld des Mobiltelefons (3) eingegebenen Text umfasst.

9. System gemäß Anspruch 6 oder 7, wobei die Nutzereingabe-Anfrage eine in das Mobiltelefon (3) über ein Mikrofon des Mobiltelefons (3) eingegebene gesprochene Anfrage umfasst.

10. System gemäß Anspruch 6 oder 7, wobei das Speicher-und Rückgewinnungssystem (7) betreibbar ist zum Identifizieren einer Vielzahl von möglichen rückzugewinnenden Multimediadateien und betreibbar ist zum Übertragen von Daten, die die Vielzahl von identifizierten Multimediadateien identifizieren, an den Nutzer, damit der Nutzer eine Multimediadatei zum Rückgewinnen auswählt.

11. Mobiles Telefon- (3) -system mit einem Mobiltelefonnetzwerk (21, 23), einem mit dem Netzwerk gekoppelten Mobiltelefon (3) und einem mit dem Netzwerk gekoppelten Speicher- und Rückgewinnungssystem (7), wobei das Mobiltelefon (3) aufweist:
einen ersten Empfänger (9; 15), der betreibbar ist zum Empfangen von Nutzerdaten;
einen zweiten Empfänger (15; 17), der betreibbar ist, zum Empfangen einer den Nutzerdaten zugeordneten Anmerkung;
einen Prozessor, der betreibbar ist, zum Verarbeiten von empfangenen Anmerkungsdaten, um Wort- und Phonem-Gitterdaten, die die empfangenen Anmerkungsdaten darstellen, zu erzeugen und zum Verarbeiten der erzeugten Wort- und Phonem-Gitterdaten, um Triphon-Indexdaten zu erzeugen, die die Sequenzen von drei in den erzeugten Wort- und Phonem-Gitterdaten vorhandenen Phonemen bezeichnen, die die empfangenen Anmerkungsdaten darstellen;
eine Einrichtung zum Erzeugen von Identifikationsdaten, die die zugeordneten Nutzerdaten den erzeugten Wort- und Phonem-Gitterdaten und Triphon-Indexdaten zuordnet;
eine Übertragungseinrichtung (45; 49) zum Übertragen der Nutzerdaten und der erzeugten Wort- und Phonem-Gitterdaten und Triphon-Indexdaten und zugeordneten Identifikationsdaten an das Telefonnetzwerk (21, 23);
wobei das Telefonnetzwerk (21, 23) betreibbar ist zum Empfangen der Nutzerdaten und erzeugten Wort- und Phonem-Gitterdaten und Triphon-Indexdaten und zugeordneten Identifikationsdaten, die von dem Mobiltelefon (3) übertragen wurden, und zum Weiterleiten der Nutzerdaten und erzeugten Wort- und Phonem-Gitterdaten und Triphon-Indexdaten und zugeordneten Identifikationsdaten an das Speicher- und Rückgewinnungssystem (7);
wobei das Speicher- und Rückgewinnungssystem (7) betreibbar ist zum Empfangen und Speichern der Nutzerdaten und der erzeugten Wort- und Phonem-Gitterdaten und Triphon-Indexdaten und der zugeordneten Identifikationsdaten für ein anschließendes Rückgewinnen.

12. Mobiles Telefon- (3) -system mit einem Mobiltelefonnetzwerk (21, 23), einem mit dem Netzwerk gekoppelten Mobiltelefon (3) und einem mit dem Netzwerk gekoppelten Speicher- und Rückgewinnungssystem (7);
wobei das Mobiltelefon (3) aufweist:
eine Einrichtung zum Erzeugen einer Nutzerdatendatei-Rückgewinnungsanforderung mit einer Nutzereingabe-Anfrage;
eine Einrichtung zum Speichern einer Vielzahl von Anmerkungen, wobei jede einer entsprechenden Nutzerdatendatei über entsprechende Identifikationsdaten zugeordnet ist, wobei jede der Anmerkungen ein Wort- und Phonem-Gitter und zugeordnete Triphon-Indexdaten, die drei in dem Wort- und Phonem-Gitter vorhandene Phonsequenzen darstellen, umfasst;
eine Einrichtung zum Erzeugen eines Wort- und Phonem-Gitters, das eine Nutzereingabe-Anfrage und zugeordnete Triphon-Indexdaten darstellt, die drei in dem erzeugten Wort- und Phonem-Gitter vorhandene Phonsequenzen darstellen;
eine Einrichtung zum Vergleichen der für eine Nutzereingabe-Anfrage erzeugten Triphon-Indexdaten, um eine Anzahl von gespeicherten Wort- und Phonem-Gittern für einen Vergleich mit dem für eine Nutzereingabe-Anfrage erzeugten Wort- und Phonemgitter auszuwählen;
eine Einrichtung, die das für eine Nutzereingabe-Anfrage erzeugte Wort- und Phonem-Gitter mit den ausgewählten gespeicherten Wort- und Phonem-Gittern vergleicht, um die von dem Speicher- und Rückgewinnungssystem (7) rückzugewinnende Nutzerdatendatei zu identifizieren; und
eine Einrichtung zum Übertragen der Identifikationsdaten, die der für das Telefonnetzwerk (21, 23) rückzugewinnenden Nutzerdatendatei zugeordnet sind;
wobei das Telefonnetzwerk (21, 23) betreibbar ist zum Empfangen der übertragenen Identifikationsdaten und betreibbar ist zum Weiterleiten der Identifikationsdaten an das Speicher- und Rückgewinnungssystem (7); und
wobei das Speicher- und Rückgewinnungssystem (7) betreibbar ist zum Empfangen der übertragenen Identifikationsdaten und zum Ausgeben der Nutzerdatendatei entsprechend den empfangenen Identifikationsdaten.

13. System gemäß Anspruch 12, wobei das Speicher- und Rückgewinnungssystem (7) betreibbar ist zum Ausgeben der Nutzerdatendatei an den Nutzer über das Mobiltelefonnetzwerk (21, 23) und das Mobiltelefon (3) des Nutzers.

## Revendications

1. Système de téléphonie mobile (3) comprenant un réseau de téléphonie mobile (21, 23), un téléphone mobile (3) relié au réseau et un système de stockage et d'extraction (7) relié au réseau, dans lequel le téléphone mobile (3) comprend :
un premier récepteur (9 ; 15) pour recevoir des données multimédia d'utilisateurs ;
un deuxième récepteur (15 ; 17) pour recevoir des données d'annotation associées aux données multimédia d'utilisateurs ;
un émetteur (45 ; 49) pour émettre vers le réseau de téléphonie (21, 23) les données multimédia d'utilisateurs et les données d'annotation associées ;
dans lequel le réseau de téléphonie (21, 23) a pour fonction de recevoir les données multimédia d'utilisateurs et les données d'annotation associées émises par le téléphone mobile (3) et de réexpédier les données multimédia d'utilisateurs et les données d'annotation associées audit système de stockage et d'extraction (7) en association avec un ID d'utilisateur identifiant un utilisateur du téléphone mobile (3) ; et
dans lequel ledit système de stockage et d'extraction (7) a pour fonction de :
recevoir les données multimédia d'utilisateurs, les données d'annotation associées et l'ID d'utilisateur ;
traiter des données d'annotation reçues pour générer des données de treillis de mots et de phonèmes représentatives desdites données d'annotation reçues ;
traiter lesdites données de treillis de mots et de phonèmes générées pour générer des données d'indices de triphones représentatives des séquences de trois phonèmes présentes dans lesdites données de treillis de mots et de phonèmes générées représentatives desdites données d'annotation reçues ; et
stocker les données multimédia d'utilisateurs dans une mémoire associée à l'utilisateur identifié par l'ID d'utilisateur, lesdites données de treillis de mots et de phonèmes générées et lesdites données d'indices de triphones étant destinées à une extraction ultérieure en utilisant lesdites données de treillis de mots et de phonèmes et lesdites données d'indices de triphone associées.

2. Système selon la revendication 1, dans lequel lesdites données multimédia d'utilisateurs comprennent une ou plusieurs d'une image, d'une séquence vidéo, de données audio et d'une présentation multimédia.

3. Système selon la revendication 1 ou 2, dans lequel lesdites données d'annotation comprennent du texte fourni en entrée par l'utilisateur par l'intermédiaire d'un clavier (17) du téléphone mobile (3).

4. Système selon la revendication 1 ou 2, dans lequel lesdites données d'annotation comprennent une annotation énoncée fournie en entrée au téléphone mobile (3) par l'intermédiaire d'un microphone (17) du téléphone mobile (3).

5. Système selon la revendication 1 ou 2, dans lequel lesdites données d'annotation comprennent un identifiant unique destiné aux données multimédia d'utilisateurs.

6. Système de téléphonie mobile (3) comprenant un réseau de téléphonie mobile (21, 23), un téléphone mobile (3) relié au réseau et un système de stockage et d'extraction (7) relié au réseau et stockant une pluralité de fichiers multimédia d'utilisateurs et des données de treillis de mots et de phonèmes et des données d'indices de triphones associées pour une pluralité d'utilisateurs différents du réseau de téléphonie mobile (21, 23) ; dans lequel le téléphone mobile (3) comprend :
un moyen (67) pour générer une demande d'extraction de fichiers multimédia comprenant une requête fournie en entrée par l'utilisateur ;
un moyen (45, 49) pour émettre la demande extraite vers le réseau de téléphonie (21, 23) ;
dans lequel le réseau de téléphonie (21, 23) a pour fonction de recevoir la demande d'extraction de fichiers multimédia émise par le téléphone mobile (3) et de réexpédier la demande d'extraction audit système de stockage et d'extraction (7) en association avec un ID d'utilisateur identifiant l'utilisateur du téléphone mobile (3) effectuant la demande ; et
dans lequel le système de stockage et d'extraction (7) a pour fonction :
i) de recevoir la demande d'extraction et l'ID d'utilisateur ;
ii) de traiter la demande d'extraction reçue pour générer des données de treillis de mots et de phonèmes représentatives de ladite demande d'extraction reçue ;
iii) de traiter lesdites données de treillis de mots et de phonèmes générées pour générer des données d'indices de triphones représentatives des séquences de trois phonèmes présentes dans lesdites données de treillis de mots et de phonèmes générées représentatives desdites données d'annotation reçues ; et
iv) de sélectionner des annotations de données de treillis de mots et de phonèmes afin de les comparer à des données de treillis de mots et de phonèmes générées pour ladite requête fournie en entrée par l'utilisateur en fonction de l'ID d'utilisateur reçu et de la ressemblance entre les données d'indices de triphones associées auxdites données de treillis de mots et de phonèmes et auxdites données d'indices de triphones générées pour ladite requête fournie en entrée par l'utilisateur ;
v) de comparer les données de treillis de mots et de phonèmes générées pour la requête fournie en entrée par l'utilisateur aux données de treillis de mots et de phonèmes sélectionnées pour identifier un fichier multimédia d'utilisateur devant être extrait ; et
vi) de transmettre à l'utilisateur le fichier multimédia d'utilisateur identifié.

7. Système selon la revendication 6, dans lequel ledit fichier d'utilisateur multimédia comprend au moins l'un d'une image, d'un fichier vidéo, d'un fichier audio et d'une présentation multimédia.

8. Système selon la revendication 6 ou 7, dans lequel ladite requête fournie en entrée par l'utilisateur comprend un texte fourni en entrée par l'utilisateur par l'intermédiaire d'un clavier du téléphone mobile (3).

9. Système selon la revendication 6 ou 7, dans lequel ladite requête fournie en entrée par l'utilisateur comprend une requête énoncée fournie en entrée au téléphone mobile (3) par l'intermédiaire d'un microphone du téléphone mobile (3).

10. Système selon la revendication 6 ou 7, dans lequel ledit système de stockage et d'extraction (7) a pour fonction d'identifier une pluralité de fichiers multimédia possibles devant être extraits et a pour fonction de transmettre à l'utilisateur des données identifiant la pluralité de fichiers multimédia identifiés pour que l'utilisateur sélectionne un fichier multimédia à extraire.

11. Système de téléphonie mobile (3) comprenant un réseau de téléphonie mobile (21, 23), un téléphone mobile (3) relié au réseau et un système de stockage et d'extraction (7) relié au réseau, dans lequel le téléphone mobile (3) comprend :
un premier récepteur (9 ; 15) ayant pour fonction de recevoir des données d'utilisateurs ;
un deuxième récepteur (15 ; 17) ayant pour fonction de recevoir une annotation associée aux données d'utilisateurs ;
un processeur ayant pour fonction de traiter des données d'annotation reçues pour générer des données de treillis de mots et de phonèmes représentatives desdites données d'annotation reçues et de traiter les données de treillis de mots et de phonèmes générées afin de générer des données d'indices de triphones représentatives des séquences de trois phonèmes présentes dans lesdites données de treillis de mots et de phonèmes générées représentatives desdites données d'annotation reçues ;
un moyen pour générer des données d'identification associant des données de treillis de mots et de phonèmes générées et des données d'indices de triphones aux données d'utilisateurs associées ;
un émetteur (45 ; 49) pour émettre vers le réseau de téléphonie (21, 23) les données d'utilisateurs et les données de treillis de mots et de phonèmes générées ainsi que les données d'indices de triphones et des données d'identification associées ;
dans lequel le réseau de téléphonie (21, 23) a pour fonction de recevoir les données d'utilisateurs, les données de treillis de mots et de phonèmes générées, les données d'indices de triphones et les données d'identification associées émises par le téléphone mobile (3) et de réexpédier les données d'utilisateurs, les données de treillis de mots et de phonèmes générées, les données d'indices de triphone et les données d'identification associées, audit système de stockage et d'extraction (7) ;
dans lequel ledit système de stockage et d'extraction (7) a pour fonction de recevoir et de stocker les données d'utilisateurs, les données de treillis de mots et de phonèmes générées, les données d'indices de triphones et les données d'identification associées pour leur extraction ultérieure.

12. Système de téléphonie mobile (3) comprenant un réseau de téléphonie mobile (21, 23), un téléphone mobile (3) relié au réseau et un système de stockage et d'extraction (7) relié au réseau,
dans lequel le téléphone mobile (3) comprend :
un moyen pour générer une demande d'extraction de fichiers de données d'utilisateurs comprenant une requête fournie en entrée par l'utilisateur ;
un moyen pour stocker une pluralité d'annotations dont chacune est associée à un fichier de données d'utilisateur respectif via des données d'identification respectives, dans lequel chacune desdites annotations comprend un treillis de mots et de phonèmes et des données d'indices de triphones associées représentatives de séquences de trois phones présentes dans le treillis de mots et de phonèmes ;
un moyen pour générer un treillis de mots et de phonèmes représentatif d'une requête fournie en entrée par l'utilisateur et des données d'indices de triphones associées représentatives de séquences de trois phones présentes dans le treillis de mots et de phonèmes généré ;
un moyen pour comparer les données d'indices de triphones générées pour une requête fournie en entrée par l'utilisateur afin de sélectionner un certain nombre de treillis de mots et de phonèmes stockés pour les comparer au treillis de mots et de phonèmes généré pour une requête fournie en entrée par l'utilisateur ;
un moyen pour comparer le treillis de mots et de phonèmes généré, pour une requête fournie en entrée par l'utilisateur, au treillis de mots et de phonèmes stocké et sélectionné afin d'identifier le fichier de données d'utilisateur devant être extrait dudit système de stockage et d'extraction (7) ; et
un moyen pour transmettre au réseau de téléphonie (21, 23) les données d'identification associées au fichier de données d'utilisateurs devant être extrait ;
dans lequel le réseau de téléphonie (21, 23) a pour fonction de recevoir les données d'identification transmises et a pour fonction de réexpédier les données d'identification audit système de stockage et d'extraction (7) ; et
dans lequel ledit système de stockage et d'extraction (7) a pour fonction de recevoir les données d'identification transmises et de fournir en sortie le fichier de données d'utilisateurs correspondant aux données d'identification reçues.

13. Système selon la revendication 12, dans lequel ledit système de stockage et d'extraction (7) a pour fonction de fournir en sortie à l'utilisateur le fichier de données d'utilisateurs par l'intermédiaire du réseau de téléphonie mobile (21, 23) et du téléphone mobile (3) de l'utilisateur.
